# EUROPÄISCHE PATENTSCHRIFT

(11) **EP 4 573 895 B1**
(45) Veröffentlichungstag und Bekanntmachung des Hinweises auf die Patenterteilung: **04.03.2026**
(21) Anmeldenummer: 24219186.4
(22) Anmeldetag: 11.12.2024
(51) Int. Cl.: A01K 27/00, B68B 1/02, B68B 5/06, B68B 5/08

(54) **KOPPLUNGSVORRICHTUNG ZWISCHEN TIERHALFTER UND FÜHRSTRICK**
COUPLING DEVICE BETWEEN AN HEADCOLLAR AND A LEAD ROPE
DISPOSITIF D'ACCOUPLEMENT ENTRE UN LICOL ET UNE LONGE

(30) Priorität: 20.12.2023 DE 102023136060
(43) Veröffentlichungstag der Anmeldung: 25.06.2025
(73) Patentinhaber: Stenten Zweiradtechnik GmbH, 52074 Aachen (DE)
(72) Erfinder: Stenten, Marcel, 4711 Walhorn (BE)
(74) Vertreter: Bauer PSU PartG mbB

(56) Entgegenhaltungen:
- US-A- 3 995 598
- US-A- 5 195 217
- US-A1- 2010 024 742
- US-A1- 2014 026 376
- US-B1- 6 286 190

## Beschreibung

### Einleitung

Die Erfindung betrifft eine Kopplungsvorrichtung zur Schaffung einer Kraft übertragenden Verbindung zwischen einem Tierhalfter und einem Führstrick, die Kopplungsvorrichtung umfassend
- einen ersten Kopplungsabschnitt zur Verbindung mit einem Kopplungselement des Tierhalfters und
- einen zweiten Kopplungsabschnitt zur Verbindung mit einem Kopplungselement des Führstricks, wobei der erste Kopplungsabschnitt eine Öse aufweist,
- wobei der zweite Kopplungsabschnitt eine dauerhaft geschlossene Öse aufweist, die mit dem öffenbaren und verschließbaren Kopplungselement des Führstricks koppelbar ist,
- wobei die Kopplungsvorrichtung eine Sollbruchstelle aufweist, die bei Überschreiten einer vordefinierten Zugkraft versagt.

### Stand der Technik

Aus dem Stand der Technik ist es bekannt Tieren, wie Pferden, Ponys, Eseln, Kühen, Lamas oder anderen, ein Tierhalfter über den Kopf zu ziehen, an dem wiederum zum Führen oder Anbinden ein Führstrick befestigt werden kann. Ein derartiger Kopfzaum kann aus Nylon, Leder oder Seilen bestehen, wobei das Tierhalfter klassischerweise im Bereich der Kinngrube und/oder seitlich vom Kopf einen Ring aufweist, an dem der Führstrick mit einem entsprechenden öffenbaren Haken oder Panikhaken befestigt werden kann.

Insbesondere im Umgang mit Pferden oder Ponys kann es zu Situationen kommen, in denen sich das Tier erschreckt und loslaufen möchte. Erschreckt sich das Tier beim Führen, ist ein Halten des Führstricks nicht sinnvoll, so dass das Pferd (oder Pony) bis zum Einfangen frei herumläuft. Dabei kann es vorkommen, dass das Tier auf den lose baumelnden Strick tritt und folglich einen Ruck auf den Kopf, insbesondere das Genick, erhält. Hierbei kann es für das Tier zu Verletzungen und/oder Verrenkungen kommen, die einen langwierigen Heilungsprozess mit sich ziehen können. Derartige Verletzungen und Verrenkungen können ebenfalls bei angebundenen Pferden auftreten, die sich erschrecken und fortlaufen möchten.

Um ein Verletzungsrisiko zu minimieren sind aus dem Stand der Technik Führstricke bekannt, die einen so genannten Panikhaken besitzen. Der Panikhaken zeichnet sich dadurch aus, dass der öffenbare und schließbare Haken im geschlossenen Zustand von einem verschiebbaren Mittelteil gehalten wird, das im Panikfall leicht von einer Person ergriffen und verschoben werden kann. Allerdings muss es der Person gelingen, das Pferd im Bereich des Panikhakens, der sich im Bereich der Kinnmulde und/oder seitlich vom Kopf befindet, zu erfassen, was jedoch schwierig ist, wenn das Tier den Kopf in die Luft reißt. Diese Panikhaken neigen jedoch zu schnellem Verschleiß, was bedeutet, dass sie sich mit der Zeit auch dann öffnen, wenn sie einen geringfügigen Ruck erhalten.

Aus der DE 10 2007 036 291 B4 ist ein Führstrick mit Panikhaken bekannt, bei dem zwischen dem Panikhaken und dem eigentlichen Strick eine Trennvorrichtung angeordnet ist, die als Band ausgebildet und fest mit einer Öse an dem Führstrick befestigt ist. Bei Nutzung wird das Band in eine Öse an dem Panikhaken gefädelt und die beiden Enden des Bandes miteinander verbunden. Die Trenneinrichtung ist so eingestellt, dass sie auslöst, wenn eine gefährliche Zugkraft auftritt.

Ferner geht aus der US 5,548,875 B1 ein Führstrick mit Sicherheitshaken zur sicheren Befestigung von Nutztieren, insbesondere Pferden, hervor. Der Sicherheitshaken verfügt an einem dem Führstrick zugeordneten Ende über eine öffenbare Öse, in der der Führstrick befestigt wird. Die öffenbare Öse verfügt über einen austauschbaren Scherstift, der dann zerstört wird, wenn eine vordefinierte Zugkraft erreicht, beziehungsweise überschritten wird.

Aus der DE 10 2007 034 068 A1 geht ein Longiergurt hervor, der sich unter anderem dadurch auszeichnen soll, dass die Befestigung von Hilfszügeln an dem Longiergurt im Falle eines Notfalls schnell und einfach lösbar sein soll. Hierzu weist der Longiergurt Befestigungselemente auf, die wiederum eine dauerhaft geschlossene Öse und eine mittels des Splints verschließbare Öse besitzen. Zur Aufhebung der Verbindung ist es allerdings nötig, den Splint mit der Hand zu entfernen.

Die DE 102 41 757 A1 befasst sich mit einer Sicherheitsvorrichtung zum Kitesurfen, die eine Art Panik-Auslösevorrichtung sowie eine Notleine umfassen soll. Dabei soll gewährleistet werden, dass ein Surfer nicht von einem unkontrollierten Kite weitergezogen werden und der Kite nicht verloren gehen kann.

Die DE 18 80 174 U beschreibt einen Schnappschäkel, der insbesondere Anwendung in der Schifffahrt haben soll. Um dem Problem entgegen zu wirken, dass der eingeschäkelte Gegenstand, wie beispielsweise eine Leine, beim Öffnen des Schäkels aufgrund der vorliegenden Geometrie des Schäkels nicht einwandfrei aus dem Schäkel gelangt, wird ein Schäkel vorgeschlagen, dessen öffenbare Lasche einen Drehpunkt erhält, der an den in Zugrichtung vorderen festen Teil des Bügels verlegt ist, sodass die bewegliche Lasche beim Öffnen von selbst in Zugrichtung und damit in der Flucht des festen Bügels zu liegen kommt und die Öffnung des Schäkels vollständig freigibt. Der zuvor eingeschäkelte Gegenstand muss daher zwangsweise aus dem offenen Schäkel gleiten und damit die Verbindung zuverlässig lösen. Der Schäkel besitzt eine dauerhaft geschlossene Öse und eine öffenbare Öse, wobei diese über einen Schnappbolzen öffenbar und schließbar ist. Der Schnappbolzen greift im geschlossenen Zustand in ein Loch in der öffenbaren Lasche ein. Soll die geschlossene Öse geöffnet werden, muss an dem Schnappbolzen gezogen werden, so dass dieser aus dem Loch der Lasche gleitet und die Öse geöffnet wird.

Ferner zeigt ein Auszug aus dem Katalog der Hermann Sprenger Metallwarenfabrik GmbH & Co. KG, 2024, S. 117 - 119, verschiedene Schäkel, die aus Edelstahl oder Messing gefertigt sind. In den Produktblättern ist jeweils eine Bruchlast angegeben, die bei den verschiedenen Schäkeln zwischen 600 kg und 5000 kg liegt, was einer Zugkraft von 6000 N bis 50000 N entspricht. Die gezeigten Schnappschäkel sind abermals so vorgesehen, dass ein Splint gezogen werden muss, wenn eine Öffnung erfolgen soll.

Schließlich offenbart das Dokument US 3 995 598 A ein Halsband mit einer Kopplungsvorrichtung, die zwei rund ausgebildete Kopplungsabschnitte aufweist, von denen der eine mit dem Halsband und der zweite mit dem Haken einer Leine verbunden ist. Die bekannte Kopplungsvorrichtung soll bei Überschreiten einer maximalen Zugkraft versagen.

### Aufgabe

Es ist Aufgabe der vorliegenden Erfindung, eine alternative Kopplungsvorrichtung zur Schaffung einer Kraft übertragenden Verbindung zwischen einem Tierhalfter und einem Führstrick zu schaffen.

### Lösung

Ausgehend von der eingangs genannten Kopplungsvorrichtung wird die vorstehende Aufgabe durch ein Verschlusselement gelöst, wobei die Öse des ersten Kopplungsabschnitts mittels des Verschlusselements verschließbar und öffenbar ist, so dass das Kopplungselement des Tierhalfters in einem Öffnungszustand der Öse in diese einführbar und in einem Schließzustand der Öse in dieser gehalten ist, wobei das Verschlusselement der Öse des ersten Kopplungsabschnitts eine Schraube ist, die in entsprechende, sich gegenüberliegende Bohrungen des ersten Kopplungsabschnitts einschraubbar ist, wobei zumindest eine der Bohrungen, vorzugsweise jeweils beide Bohrungen, ein entsprechendes Innengewinde aufweisen, wobei der erste Kopplungsabschnitt und der zweite Kopplungsabschnitt als ein Spritzgussteil aus einem thermoplastischen Polymer ausgebildet sind.

Die Fertigung von Spritzgussteilen ist kostengünstig, wobei jegliche geometrische Formen erzeugt werden können. Auch im Sinne der Stabilität können Spritzgussteile an verschiedene Anforderungen angepasst werden. Das Verschlusselement liegt als einzelnes Bauteil vor, das beim Öffnen oder Schließen der Öse des ersten Kopplungsabschnitts betätigt wird. Es kann aus verschiedenen Materialien gebildet sein, wie Metall oder Kunststoff. Vorteilhafterweise kann es jedoch auch als ein zweites Spritzgussteil aus einem thermoplastischen Polymer ausgebildet sein.

Eine kraftübertragende Verbindung zwischen dem Tierhalfter und dem Führstrick beziehungsweise Anbindeseil ist im Sinne der vorliegenden Anmeldung eine Verbindung, bei der eine Person das Tier führen kann, ohne dass die Kopplungsvorrichtung sich löst. Demnach findet eine Kraftübertragung vom Strick über die Kopplungsvorrichtung in das Halfter oder umgekehrt statt, so dass ein Handling mit dem Tier auf gewöhnliche Weise möglich ist.

An dem Tierhalfter befindet sich typischerweise ein Kopplungselement, beispielsweise in Form eines Ringes, wobei dieser im Bereich der Kinngrube und/oder seitlich vom Kopf des Tieres angeordnet ist. Erfindungsgemäß wird der erste Kopplungsabschnitt an diesem Ring befestigt, indem das Verschlusselement für die Öse zunächst entfernt wird, der Ring des Halfters in die Öse geführt wird und das Verschlusselement dann wieder am ersten Kopplungsabschnitt eingeführt wird, um die Öse zu verschließen. Die Öse des ersten Kopplungsabschnitts ist somit öffenbar und verschließbar mittels des Verschlusselements. Die Kopplungsvorrichtung kann jedoch nach einmaliger Installation an dem Halfter verbleiben, um ein ständiges Anbringen und Lösen derselben an dem Halfter zu vermeiden. Die Kopplungsvorrichtung sollte aus diesem Grund Abmessungen besitzen, die bei der Handhabung des Halfters nicht als störend empfunden werden. Beispielsweise kann die Länge der Kopplungsvorrichtung in einem Bereich zwischen 5 cm und 7 cm betragen.

Ist die Kopplungsvorrichtung an dem Halfter befestigt, so liegt der zweite Kopplungsabschnitt mit seiner dauerhaft geschlossenen Öse frei. Die dauerhaft geschlossene Öse kann beispielsweise ringförmig ausgebildet sein, wobei auch andere Geometrien denkbar sind. Die Öse dient zur Verbindung mit einem Kopplungselement des Führstricks, wie beispielsweise einem Karabinerhaken oder einem Panikhaken, wobei die entsprechenden Haken durch die Öse geführt und somit fixiert werden.

Die erfindungsgemäße Kopplungsvorrichtung weist eine Sollbruchstelle auf, die bei Überschreiten einer vordefinierten Zugkraft bricht. Auf diese Weise ist nicht nur die Kraft, bei der ein Brechen der Kopplungsvorrichtung eintritt, sondern auch die Stelle, an der das Brechen erfolgt, vorgegeben. Die Ausbildung der Sollbruchstelle kann beispielsweise durch das Vorsehen einer geringeren Materialstärke erfolgen.

Mit anderen Worten ist es vorgesehen, dass die Kopplungsvorrichtung bei Auftreten einer zu großen Belastung so reißt oder bricht, dass die Verbindung zwischen dem Führstrick und dem Halfter aufgehoben ist. Dabei verbleibt der Führstrick an einem Anbindeplatz des Tieres oder - für den Fall, dass das Tier zuvor auf den Strick getreten ist - am Boden, so dass das Tier dann ohne einen baumelnden Strick frei laufen kann. Das Risiko, das bei einem Treten auf den Strick für ein Pferd bestehen würde, wird somit vermieden.

Ferner besteht ein großer Vorteil der erfindungsgemäßen Kopplungsvorrichtung gegenüber den aus dem Stand der Technik bekannten Kopplungsvorrichtungen darin, dass zum "Auslösen" der Sollbruchstelle, also zum Auslösen der Panikfunktion, kein händisches Manipulieren an der Kopplungsvorrichtung nötig ist. Die Panikfunktion tritt somit selbsttätig ein.

Ein weiterer Vorteil der erfindungsgemäßen Kopplungsvorrichtung besteht darin, dass sie nach einem Bruch auf einfache Weise ausgetauscht werden kann. Dies ist insbesondere deshalb möglich, weil der erste Kopplungsabschnitt öffenbar und verschließbar ist und ein Kopplungselement des Führstricks ebenfalls öffenbar und verschließbar ist. Die Kopplungsvorrichtung kann somit ohne Weiteres von dem Tierhalfter und von dem Führstrick entkoppelt werden und bei Bedarf durch eine neue Kopplungsvorrichtung ersetzt werden.

Gemäß der Erfindung ist es vorgesehen, dass das Verschlusselement der Öse des ersten Kopplungsabschnitts eine Schraube ist, die in entsprechende, sich gegenüberliegenden Bohrungen des ersten Kopplungsabschnitts einschraubbar ist, wobei zumindest eine der Bohrungen, vorzugsweise jeweils beide Bohrungen, ein korrespondierendes Innengewinde aufweisen. Bestenfalls kann das Verschlusselement ohne Werkzeug in den ersten Kopplungsabschnitt eingeführt werden. Denkbar wäre jedoch auch, dass das Verschlusselement mittels eines Werkzeuges, beispielsweise mittels eines Schraubendrehers eingeschraubt wird. Ein nachträgliches Lösen des Verschlusselements aus dem ersten Kopplungsabschnitt ist insbesondere dann von Vorteil, wenn die Kopplungsvorrichtung versagt hat und somit defekt ist, denn dann kann der erste Kopplungsabschnitt von dem Tierhalfter und der zweite Kopplungsabschnitt von dem Führstrick entnommen und ausgetauscht werden.

Vorteilhafterweise ist es vorgesehen, dass die Kopplungsvorrichtung bei Überschreiten einer Zugkraft in einem Bereich zwischen 1000 N und 3000 N, weiter vorzugsweise bei Überschreiten einer Zugkraft in einem Bereich von 1500 N bis 2500 N, versagt. Wenn also ein Ruck in der vorgenannten Größenordnung auf den Führstrick wirkt, bricht die Kopplungsvorrichtung. Eine das Tier führende Person muss somit nicht zunächst an ein in einer derartigen Situation an das Halfter greifen, um den Führstrick zu lösen. Wenn das Tier ohne Führstrick fortrennt, kann sich der Führstrick aufgrund der erfindungsgemäßen Kopplungsvorrichtung selbst in einer gefährlichen Situation lösen. Es kann somit verhindert werden, dass sich das Tier Verletzungen und/oder Verrenkungen zuzieht.

Die Sollbruchstelle kann dabei an verschiedenen Stellen vorgesehen sein. Es ist möglich, dass das Verschlusselement der Öse des ersten Kopplungsabschnitts bricht, oder aber dass die Öse des zweiten Kopplungsabschnitts bei der hohen Belastung bricht. Alternativ kann auch vorgesehen sein, dass die Kopplungsvorrichtung in einem Bereich zwischen dem ersten Kopplungsabschnitt und dem zweiten Kopplungsabschnitt auseinanderbricht.

Im Gegensatz zu dem bekannten Stand der Technik ist jedenfalls vorgesehen, dass die Kopplungsvorrichtung ohne Zutun einer Person versagt, dementsprechend muss nicht zunächst ein Splint oder ähnliches gezogen werden, um ein Lösen der Kopplungsvorrichtung zu bewirken oder zu ermöglichen. Das Vorsehen einer Sollbruchstelle ist im Umgang mit Pferden besonders von Vorteil, da das Erreichen der Kopplungsvorrichtung im Panikfall eines Pferdes schlecht beziehungsweise nicht gegeben ist. Durch die Sollbruchstelle ist ein kontrolliertes und gewolltes Versagen der Kopplungsvorrichtung möglich.

Es ist besonders von Vorteil, wenn der erste Kopplungsabschnitt zwei parallel und im Abstand zueinander verlaufende Schenkel aufweist, durch die die Bohrungen verlaufen. Das Verschlusselement, die beiden Schenkel und ein die Schenkel verbindender Schenkelgrund bilden auf diese Weise die verschlossene Öse des ersten Kopplungsabschnitts. In einer Seitenansicht ergibt sich durch die beiden Schenkel ein Y-förmiger Querschnitt der Kopplungsvorrichtung.

Somit sieht eine vorteilhafte Weiterentwicklung der Kopplungsvorrichtung vor, dass das Verschlusselement mit einem Werkzeug oder werkzeuglos in die Bohrung einsetzbar ist.

Die Erfindung vorteilhaft ausgestaltend ist es vorgesehen, dass ein Innendurchmesser der Öse des zweiten Kopplungsabschnitts zwischen 12 mm und 25 mm, weiter vorzugsweise zwischen 15 mm und 20 mm beträgt und ein Außendurchmesser der Öse des zweiten Kopplungsabschnitts zwischen 20 mm und 40 mm beträgt, weiter vorzugsweise zwischen 25 mm und 35 mm beträgt. Der Innendurchmesser sollte derart gewählt werden, dass ein Kopplungselement des Führstricks möglichst leicht in die Öse des zweiten Kopplungsabschnitts eingeführt werden kann. Der Außendurchmesser sollte wiederum derart gewählt werden, dass die Kopplungsvorrichtung nicht störend ist. Ebenso müssen der Innendurchmesser und der Außendurchmesser derart aufeinander abgestimmt sein, dass der zweite Kopplungsabschnitt starken Zugkräften standhält.

Weiterhin sieht eine vorteilhafte Ausgestaltung der Erfindung vor, dass eine Gesamtlänge der Kopplungsvorrichtung zwischen 50 mm und 70 mm beträgt. Die Gesamtlänge der Kopplungsvorrichtung sollte ebenfalls so gewählt werden, dass diese bei Benutzung nicht als störend empfunden wird. Dennoch sollte ausreichend Platz zur Verfügung stehen, um das Kopplungselement des Führstricks und das Kopplungselement des Tierhalfters darin anzubringen.

Vorteilhafterweise weist die Kopplungsvorrichtung ausschließlich abgerundete Ecken und Kanten auf. Somit kann verhindert werden, dass die Kopplungsvorrichtung irgendwo hängen bleibt.

Die Erfindung vorteilhaft ausgestaltend ist es vorgesehen, dass eine Mittelachse der Öse des zweiten Kopplungsabschnitts parallel zu den Mittelachsen der Bohrungen des ersten Kopplungsabschnitts verlaufen. Hieraus ergibt sich, dass eine Ebene, die senkrecht auf die Mittelachse der Öse des zweiten Kopplungsabschnitts steht, um 90° zu der Ebene, in der sich die Öse des ersten Kopplungsabschnitts befindet, verdreht ist. Die Öffnungsquerschnitte der beiden Ösen verlaufen somit um 90° versetzt zueinander.

Der erste und zweite Kopplungsabschnitt der Kopplungsvorrichtung können in einer Seitenansicht unterschiedliche Dicken aufweisen, wobei sich zwischen dem ersten und zweiten Kopplungsabschnitt eine Art Übergangsabschnitt befinden kann, in der die Dicken der Kopplungsabschnitte ineinander übergehen.

Schließlich sei angemerkt, dass die verschiedenen Merkmale der Unteransprüche in Bezug auf die erfindungsgemäße Vorrichtung je einzeln für sich oder zu mehreren in beliebigen Kombinationen bei Varianten der Erfindung verwirklicht sein können.

### Ausführungsbeispiele

Die vorstehend beschriebene Erfindung wird nachfolgend anhand eines Ausführungsbeispiels näher erläutert, das in den Figuren dargestellt ist. Es zeigt:
- Figur 1:: eine Draufsicht auf eine ersten erfindungsgemäße Kopplungsvorrichtung,
- Figur 2:: eine Unteransicht auf die Kopplungsvorrichtung aus Figur 1,
- Figur 3:: eine Draufsicht auf die Kopplungsvorrichtung gemäß Figur 1 mit Verschlusselement,
- Figuren 4 und 5:: jeweils eine Seitenansicht der Kopplungsvorrichtung aus Figur 1 und
- Figur 6:: eine dreidimensionale Ansicht auf ein Halfter mit Kopplungsvorrichtung und Führstrick.

Bei der nachfolgend dargestellten Ausführungsform sind baulich gleiche Bauteile und gleich wirkende Bauteile mit gleichen Bezugszeichen versehen. Der Übersichtlichkeit halber ist nicht jedes sich in den Figuren wiederholende Bauteil in jeder Figur erneut gekennzeichnet.

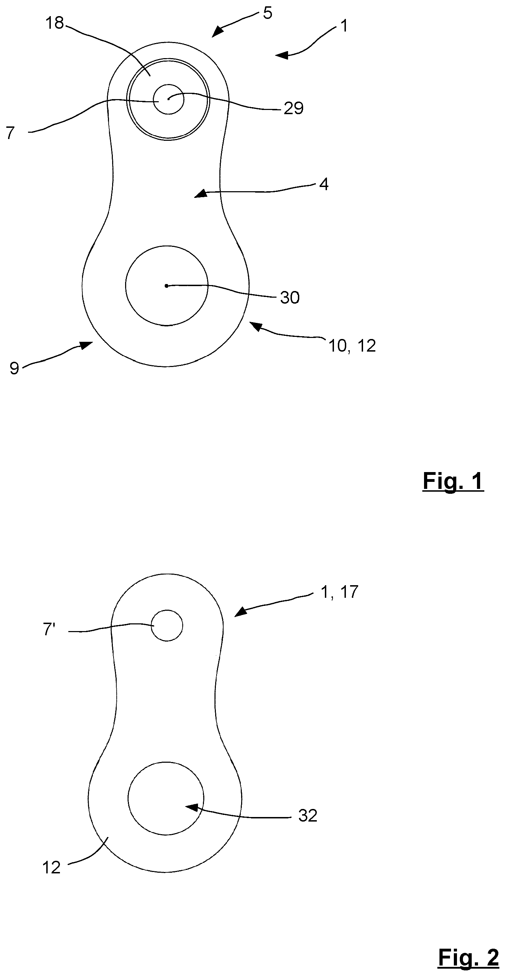

In den Figuren 1 bis 6 ist eine erfindungsgemäße Kopplungsvorrichtung 1 zur Schaffung einer Kraft übertragenden Verbindung zwischen einem Tierhalfter 2 und einem Führstrick 3 von verschiedenen Seiten gezeigt.

In der Figur 1 ist die Kopplungsvorrichtung 1 in einer Draufsicht gezeigt, so dass eine Oberseite 4 zu erkennen ist. Die Kopplungsvorrichtung 1 besitzt einen ersten Kopplungsabschnitt 5, der für die Verbindung mit einem Kopplungselement 6 des Tierhalfters 2 vorgesehen ist. In der Figur 1 ist in dem ersten Kopplungsabschnitt 5 eine Bohrung 7 mit Senkung für ein Verschlusselement 8 zu erkennen, auf das im Folgenden weiter eingegangen wird.

Ferner besitzt die erfindungsgemäße Kopplungsvorrichtung 1 einen zweiten Kopplungsabschnitt 9, der als ringförmiges Ende 10 der Kopplungsvorrichtung 1 ausgebildet ist, und zur Verbindung mit einem Kopplungselement 11 des Führstricks 3 vorgesehen ist. Das ringförmige Ende 10 kann auch als dauerhaft geschlossene Öse 12 aufgefasst werden. Ein Innendurchmesser der Öse 12 beträgt ca. 12 mm bis 20 mm und ein Außendurchmesser beträgt ca. 20 bis 35 mm.

Insgesamt ist die Kopplungsvorrichtung 1 langgestreckt ausgebildet und ähnelt in der Draufsicht aufgrund von abgerundeten Enden und einem bauchig ausgebildeten zweiten Kopplungsabschnitt 9 einer Erdnussschale.

Die Kopplungsvorrichtung 1 ist als Spritzgussteil aus einem thermoplastischen Polymer hergestellt.

Die Figur 2 zeigt eine Unteransicht der erfindungsgemäßen Kopplungsvorrichtung 1, wobei sich die Unteransicht von der Draufsicht lediglich im Hinblick auf die Bohrung 7' im ersten Kopplungsabschnitt 5 unterscheidet, die in der Unteransicht als einfache Bohrung 7' ohne Senkung zu erkennen ist.

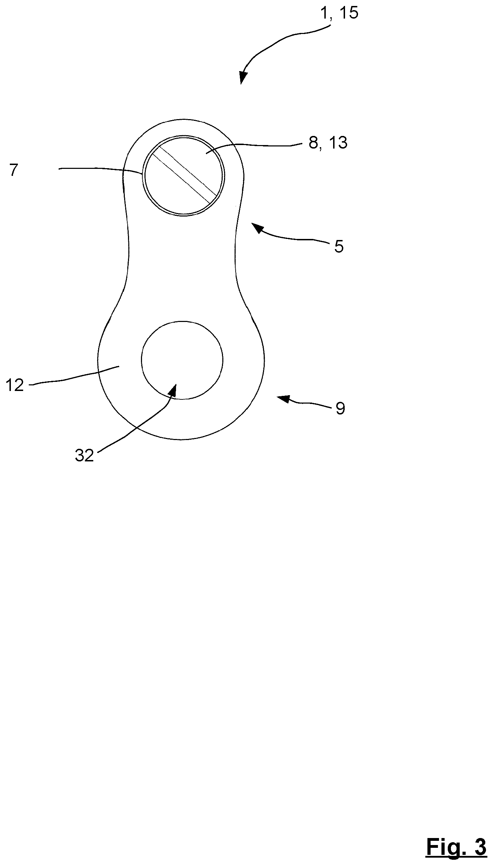

In der Figur 3 ist abermals eine Draufsicht auf die erfindungsgemäße Kopplungsvorrichtung 1 in ihrem Schließzustand 15 gezeigt, wobei in der Bohrung 7 das Verschlusselement 8 in Form einer Schraube 13 angeordnet ist. Die Schraube 13 kann aus verschiedenen Materialien gefertigt sein, wobei sie im vorliegenden Fall ebenfalls aus einem thermoplastischen Polymer spritzgegossen ist. Das Verschlusselement 8 in Form der Schraube 13 ist durch die erste Bohrung 7 hindurchgeführt und in das Innengewinde der zweiten Bohrung 7' eingeschraubt. Von dem Verschlusselement 8 ist lediglich der Schraubenkopf sichtbar, der in einer Ebene mit der Oberfläche einer in Figur 3 sichtbaren Seite des ersten Kopplungsabschnitts 5 liegt.

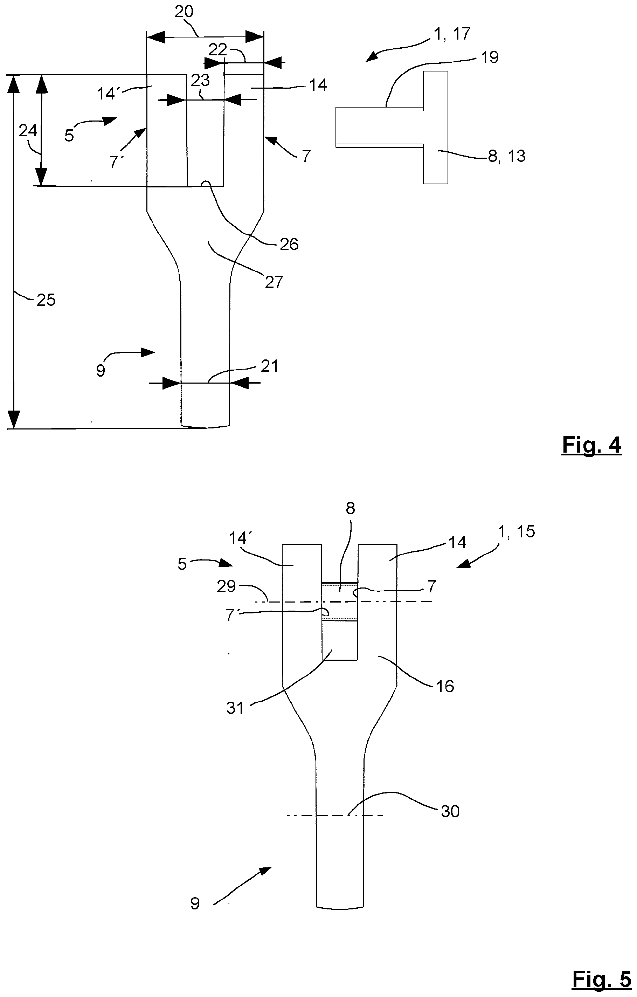

Wie insbesondere den Figuren 4 und 5 entnommen werden kann, die jeweils eine Seitenansicht der Kopplungsvorrichtung 1 zeigen, besteht der erste Kopplungsabschnitt 5 aus zwei parallelen und in einem Abstand zueinander befindlichen Schenkeln 14, 14', welche gemeinsam mit dem Verschlusselement 8 in einem Schließzustand 15, in dem das Verschlusselement 8 eingebracht ist, eine Öse 16 ausbilden (Figur 5). Im Unterscheid zu der Öse 12 des zweiten Kopplungsabschnitts 9 lässt sich die Öse 16 des ersten Kopplungsabschnitts 5 mit dem Verschlusselement 8 in einen Öffnungszustand 17, in dem kein Verschlusselement 8 eingebracht ist, oder in den Schließzustand 15 überführen. Das Verschlusselement 8 wird in diesem Ausführungsbeispiel von der Schraube 13 gebildet, welche ebenfalls aus einem thermoplastischen Polymer hergestellt ist. Das Öffnen und Verschließen kann werkzeuglos oder mit einem Werkzeug, beispielsweise in Form eines Schraubendrehers erfolgen.

Um den ersten Kopplungsabschnitt 5 in den Schließzustand 15 zu überführen, wird das Verschlusselement 8 zunächst durch eine erste Bohrung 7 (Figur 1) des ersten Schenkels 14 hindurchgeführt und anschließend durch eine zweite Bohrung 7' (Figur 2) in den zweiten Schenkel 14'. Die erste Bohrung 7 weist eine Fase 18 auf, die es ermöglicht, dass eine Oberseite, in diesem dargestellten Beispiel ein Schraubenkopf, in der Bohrung 7' derart versinkt, dass eine Oberfläche des Schraubenkopfes eben zu einer Oberfläche des Schenkels 14 angeordnet ist. Wie insbesondere der Figur 5 entnommen werden kann, steht der Schraubenkopf im Schließzustand 15 nicht über der Oberfläche des ersten Kopplungsabschnitts 5 über. Die zweite Bohrung 7' weist ein Innengewinde auf, in welche ein Außengewinde 19 des Verschlusselements 8 eingeschraubt ist. Hierdurch entsteht die verschlossene Öse 16 des ersten Kopplungsabschnitts 5. Das Innengewinde ist in den Figuren nicht dargestellt.

In den Figuren 4 und 5 ist gut zu erkennen, dass die gezeigte erfindungsgemäße Kopplungsvorrichtung 1 in der Seitenansicht Y-förmig ausgebildet ist, was auf die Ausbildung der Schenkel 14, 14' zurückzuführen ist. Eine Dicke 20 des ersten Kopplungsabschnitts 5 ist mehr als doppelt so groß als eine Dicke 21 des zweiten Kopplungsabschnitts 9. Die Dicke 21 des zweiten Kopplungsabschnitts 9 ist 5 mm, während die Dicke 20 des ersten Kopplungsabschnitts 5 15 mm beträgt. Die Dicke 22 eines Schenkels 14, 14' beträgt 5 mm. Ein Abstand 23 zwischen den Schenkel 14, 14' beträgt 5 mm. Eine Länge 24 der beiden Schenkel beträgt 20 cm. Eine Gesamtlänge 25 der Kopplungsvorrichtung 1 beträgt 60 mm. Ausgehend von einem Schenkelgrund 26 reduziert sich die Dicke der Kopplungsvorrichtung 1 kontinuierlich bis auf die Dicke 21 des zweiten Kopplungsabschnitts 9. Die Abmessungen können wie folgt variieren: Die Dicke 21 des zweiten Kopplungsabschnitts 9 kann zwischen 4 mm und 7 mm betragen, die Dicke 20 des ersten Kopplungsabschnitts 5 zwischen 15 und 25 mm, die Dicke 22 eines Schenkels 14, 14' zwischen 4 mm und 7 mm. Der Abstand 23 kann zwischen 7 mm und 10 mm betragen. Die Länge 24 kann zwischen 20 mm und 30 mm betragen und die Gesamtlänge 25 zwischen 50 und 70 mm.

Der erste und zweite Kopplungsabschnitt 5, 9 der Kopplungsvorrichtung 1 sind einstückig hergestellt, wobei sich zwischen dem ersten und zweiten Kopplungsabschnitt 5, 9 eine Art Übergangsabschnitt 27 befindet, in der - wie vorgenannt erläutert - die Dicken 20, 21 der Kopplungsabschnitte 5, 9 ineinander übergehen.

Ferner ist in der Figur 5 eine gemeinsame Mittelachsen 29 der Bohrungen 7, 7' der Schenkel 14, 14' eingezeichnet, sowie eine Mittelachse 30 der dauerhaft geschlossenen Öse 12, wobei deutlich wird, dass die Mittelachsen 29, 30 parallel und in einem Abstand zueinander verlaufen. Während die Öse 16 des ersten Kopplungsabschnitts 5 in der Figur 5 sichtbar ist und ein Öffnungsquerschnitt 31 der Öse 16 senkrecht zur Zeichnungsebene verläuft, ist ein Öffnungsquerschnitt 32 der dauerhaft geschlossenen Öse 12 des zweiten Kopplungsabschnitts 9 in der Figur 5 nicht sichtbar, sondern verläuft entlang der Mittelachse 30 der Öse 12. Es wird deutlich, dass der Öffnungsquerschnitt 31 der Öse 16 zum einen senkrecht zu der Mittelachse 29 der Bohrungen 7, 7' und anderseits senkrecht zu dem Öffnungsquerschnitt 32 der Öse 12 verläuft. Die beiden Öffnungsquerschnitte 31, 32 sind somit um 90° versetzt zueinander.

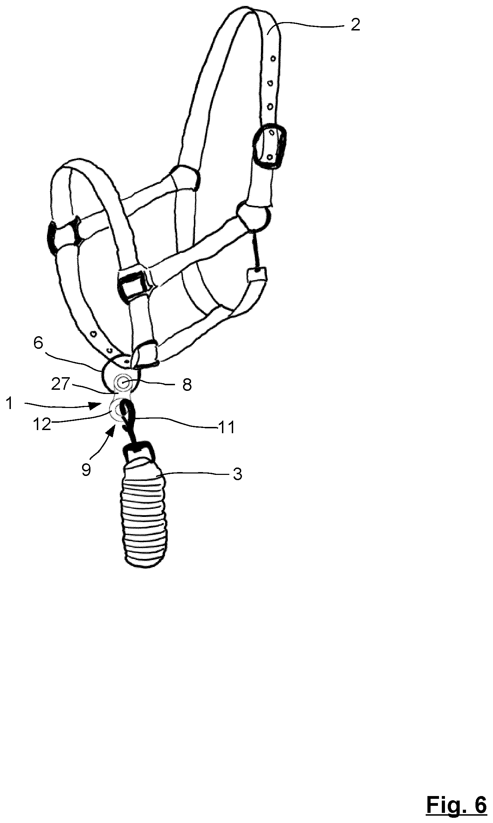

In der Figur 6 ist das Tierhalfter 2 dargestellt, das über das Kopplungselement 6 in Form eines Rings 28 verfügt. Zur Befestigung der erfindungsgemäßen Kopplungsvorrichtung 1 wurde der Ring 28 zwischen die beiden Schenkel 14, 14' eingeschoben und anschließend die Öse 16 mittels des Verschlusselements 8 verschlossen. Somit befindet sich der Ring 28 in der geschlossenen Öse 16 und die Kopplungsvorrichtung 1 ist fest mit dem Tierhalfter 2 verbunden.

In der dauerhaft geschlossenen Öse 12 des zweiten Kopplungsabschnitts 9 ist das Kopplungselement 11 des Führstricks 3 in Form eines Karabinerhakens eingehakt. Die erfindungsgemäße Kopplungsvorrichtung 1 verbindet somit das Tierhalfter 2 und den Führstrick 3. Der Führstrick 3 ist aus optischen Zwecken als aufgewickelter Strick dargestellt.

In einem Bereich zwischen dem ersten Kopplungsabschnitt 5 und dem zweiten Kopplungsabschnitt 9, also dem Übergangsabschnitt 27, befindet sich eine hier nicht erkennbare Sollbruchstelle, welche bei einem Überschreiten einer Zugkraft von 2000 N versagt. Das heißt, dass die beiden Kopplungsabschnitte 5, 9 bei einer ruckartigen, kräftigen Bewegung eines Tieres auseinanderbrechen und somit der Führstrick 3 nicht mehr mit dem Tierhalfter 2 verbunden ist.

Alternativ kann die Sollbruchstelle auch an der dauerhaft geschlossenen Öse 12 des zweiten Kopplungsabschnitts 9 vorgesehen sein. Auch wäre es möglich, die Schraube 13 im Bereich des ersten Kopplungsabschnitts 5 mit einer Sollbruchstelle zu versehen oder diese insgesamt als Sollbruchstelle auszuführen, insbesondere durch entsprechende Dimensionierung und/oder Materialauswahl, so dass diese bei Überschreiten der vorgesehenen Zugkraft versagt.

### Bezugszeichenliste:

- 1: Kopplungsvorrichtung
- 2: Tierhalfter
- 3: Führstrick
- 4: Oberseite
- 5: Erster Kopplungsabschnitt
- 6: Kopplungselement des Tierhalfters
- 7, 7': Bohrung
- 8: Verschlusselement
- 9: zweiter Kopplungsabschnitt
- 10: ringförmiges Ende
- 11: Kopplungselement des Führstricks
- 12: dauerhaft geschlossene Öse
- 13: Schraube
- 14, 14': Schenkel
- 15: Schließzustand
- 16: Öse
- 17: Öffnungszustand
- 18: Fase
- 19: Außengewinde
- 20: Dicke
- 21: Dicke
- 22: Dicke Schenkel
- 23: Abstand
- 24: Länge
- 25: Gesamtlänge
- 26: Schenkelgrund
- 27: Übergangsabschnitt
- 28: Ring
- 29: Mittelachse Bohrung
- 30: Mittelachse Öse
- 31: Öffnungsquerschnitt
- 32: Öffnungsquerschnitt

## Patentansprüche

1. Kopplungsvorrichtung (1) zur Schaffung einer Kraft übertragenden Verbindung zwischen einem Tierhalfter (2) und einem Führstrick (3), die Kopplungsvorrichtung (1) umfassend
- einen ersten Kopplungsabschnitt (5) zur Verbindung mit einem Kopplungselement (6) des Tierhalfters (2) und
- einen zweiten Kopplungsabschnitt (9) zur Verbindung mit einem Kopplungselement (11) des Führstricks (3), wobei der erste Kopplungsabschnitt (5) eine Öse (16) aufweist,
- wobei der zweite Kopplungsabschnitt (9) eine dauerhaft geschlossene Öse (12) aufweist, die mit dem öffenbaren und verschließbaren Kopplungselement (11) des Führstricks (3) koppelbar ist,
- wobei die Kopplungsvorrichtung (1) eine Sollbruchstelle aufweist, die bei Überschreiten einer vordefinierten Zugkraft versagt,
**gekennzeichnet durch**
ein Verschlusselement (8), wobei die Öse (16) des ersten Kopplungsabschnitts (5) mittels des Verschlusselements (8) verschließbar und öffenbar ist, so dass das Kopplungselement (6) des Tierhalfters (2) in einem Öffnungszustand (17) der Öse (16) in diese einführbar und in einem Schließzustand (15) der Öse (16) in dieser gehalten ist, wobei das Verschlusselement (8) der Öse (16) des ersten Kopplungsabschnitts (5) eine Schraube (13) ist, die in entsprechende, sich gegenüberliegenden Bohrungen (7, 7') des ersten Kopplungsabschnitts (5) einschraubbar ist, wobei zumindest eine der Bohrungen (7'), vorzugsweise jeweils beide Bohrungen, ein entsprechendes Innengewinde aufweisen, wobei der erste Kopplungsabschnitt (5) und der zweite Kopplungsabschnitt (9) als ein Spritzgussteil aus einem thermoplastischen Polymer ausgebildet sind.

2. Kopplungsvorrichtung (1) nach Anspruch 1, **dadurch gekennzeichnet, dass** die Kopplungsvorrichtung (1) bei Überschreiten einer Zugkraft in einem Bereich zwischen 1000 N und 3000 N, weiter vorzugsweise bei Überschreiten einer Zugkraft in einem Bereich von 1500 N bis 2500 N, bricht.

3. Kopplungsvorrichtung (1) nach Anspruch 1 oder 2, **dadurch gekennzeichnet, dass** der erste Kopplungsabschnitt (5) zwei parallel und im Abstand (23) zueinander verlaufende Schenkel (14, 14') aufweist, durch die die Bohrungen (7, 7') verlaufen.

4. Kopplungsvorrichtung (1) nach mindestens einem der Ansprüche 1 bis 3, **dadurch gekennzeichnet, dass** das Verschlusselement (8) dazu ausgelegt ist, mit einem Werkzeug oder werkzeuglos in die Bohrungen (7, 7') eingesetzt zu werden.

5. Kopplungsvorrichtung (1) nach mindestens einem der vorherigen Ansprüche, **dadurch gekennzeichnet, dass** ein Innendurchmesser der Öse (12) des zweiten Kopplungsabschnitts (9) zwischen 12 mm und 25 mm, weiter vorzugsweise zwischen 15 mm und 20 mm beträgt und ein Außendurchmesser der Öse (12) des zweiten Kopplungsabschnitts (9) zwischen 20 mm und 40 mm beträgt, weiter vorzugsweise zwischen 25 mm und 35 mm beträgt.

6. Kopplungsvorrichtung (1) nach mindestens einem der vorherigen Ansprüche, **dadurch gekennzeichnet, dass** eine Gesamtlänge (25) der Kopplungsvorrichtung (1) zwischen 50 mm und 70 mm beträgt.

7. Kopplungsvorrichtung (1) nach mindestens einem der vorherigen Ansprüche, **dadurch gekennzeichnet, dass** eine Mittelachse (30) der Öse (12) des zweiten Kopplungsabschnitts (9) parallel zu den Mittelachsen (29) der Bohrungen (7, 7') des ersten Kopplungsabschnitts (5) verlaufen.

## Claims

1. A coupling device (1) for creating a force-transmitting connection between an animal halter (2) and a lead rope (3), the coupling device (1) comprising
- a first coupling portion (5) for connection to a coupling element (6) of the animal halter (2) and
- a second coupling portion (9) for connection to a coupling element (11) of the lead rope (3), wherein the first coupling portion (5) comprises an eyelet (16),
- wherein the second coupling portion (9) has a permanently closed eyelet (12) which can be coupled to the openable and closable coupling element (11) of the lead rope (3),
- wherein the coupling device (1) has a predetermined breaking point which fails when a predefined tractive force is exceeded,
**characterised by**
a closure element (8), wherein the eyelet (16) of the first coupling portion (5) can be closed and opened by means of the closure element (8), so that the coupling element (6) of the animal halter (2) can be inserted into the eyelet (16) in an open state (17) thereof and is held therein in a closed state (15) of the eyelet (16), wherein the closing element (8) of the eyelet (16) of the first coupling portion (5) is a screw (13), which can be screwed into corresponding bores (7, 7') of the first coupling portion (5) which lie opposite one another, wherein at least one of the bores (7'), preferably in the each case both bores, have a corresponding internal thread, wherein the first coupling portion (5) and the second coupling portion (9) are formed as an injection-molded part made of a thermoplastic polymer.

2. The coupling device (1) according to claim 1, **characterised in that** the coupling device (1) breaks when a tractive force is exceeded in a range between 1000 N and 3000 N, more preferably when a tractive force is exceeded in a range from 1500 N to 2500 N.

3. The coupling device according to claim 1 or 2, **characterised in that** the first coupling portion (5) has two legs (14, 14') which run parallel and at a distance (23) from one another, through which the bores (7, 7') run.

4. The coupling device (1) according to at least one of claim 1 to 3, **characterised in that** closure element (8) is designed to be inserted into bores (7, 7') with or without a tool.

5. The coupling device (1) according to at least one of the preceding claims, **characterised in that** an inner diameter of the eyelet (12) of the second coupling portion (9) is between 12 mm and 25 mm, more preferably between 15 mm and 20 mm, and an outer diameter of the eyelet (12) of the second coupling portion (9) is between 20 mm and 40 mm, more preferably between 25 mm and 35 mm.

6. The coupling device (1) according to at least one of the preceding claims, **characterised in that** a total length (25) of the coupling device (1) is between 50 mm and 70 mm.

7. The coupling device (1) according to at least one of the preceding claims, **characterised in that** a central axis (30) of the eyelet (12) of the second coupling portion (9) runs parallel to the central axes (29) of the bores (7, 7') of the first coupling portion (5).

## Revendications

1. Dispositif d'accouplement (1) destiné à créer une liaison transmettant une force entre un licol animal (2) et une longe (3), le dispositif d'accouplement (1) comprenant
- une première section d'accouplement (5) pour la liaison avec un élément d'accouplement (6) du licol animal (2), et
- une deuxième section d'accouplement (9) pour la liaison avec un élément d'accouplement (11) de la longe (3), sachant que la première section d'accouplement (5) comporte un œillet (16),
- sachant que la deuxième section d'accouplement (9) comporte un œillet (12) à fermeture permanente, qui peut être accouplé à l'élément d'accouplement (11) ouvrable et fermable de la longe (3),
- sachant que le dispositif d'accouplement (1) comporte un point de rupture théorique, qui cède en cas de dépassement d'une force de traction prédéfinie,
**caractérisé par**
un élément de fermeture (8), sachant que l'œillet (16) de la première section d'accouplement (5) peut être fermé et ouvert au moyen de l'élément de fermeture (8) de telle manière que l'élément d'accouplement (6) du licol animal (2) peut être introduit dans celui-ci dans un état d'ouverture (17) de l'œillet (16) et est maintenu dans celui-ci dans un état de fermeture (15) de l'œillet (16), sachant que l'élément de fermeture (8) de l'œillet (16) de la première section d'accouplement (5) est une vis (13), qui peut être vissée dans des trous correspondants, s'opposant (7, 7') de la première section d'accouplement (5), sachant au moins qu'un des trous (7'), de préférence respectivement les deux trous, comportent un filetage intérieure correspondant, sachant que la première section d'accouplement (5) et la deuxième section d'accouplement (9) sont constituées sous la forme d'une pièce moulée par injection dans un polymère thermoplastique.

2. Dispositif d'accouplement (1) selon la revendication 1, **caractérisé en ce que** le dispositif d'accouplement (1) se rompt en cas de dépassement d'une force de traction se situant dans une gamme entre 1000 N et 3000 N, de préférence par ailleurs en cas de dépassement d'une force de traction se situant dans une gamme de 1500 N à 2500 N.

3. Dispositif d'accouplement (1) selon la revendication 1 ou 2, **caractérisé en ce que** la première section d'accouplement (5) comporte deux branches (14, 14') passant parallèlement et à distance (23) l'une de l'autre à travers lesquelles passent les trous (7, 7').

4. Dispositif d'accouplement (1) selon au moins l'une quelconque des revendications précédentes, **caractérisé en ce que** l'élément de fermeture (8) est conçu pour être inséré avec un outil ou sans outil dans les trous (7, 7').

5. Dispositif d'accouplement (1) selon au moins l'une quelconque des revendications précédentes, **caractérisé en ce qu'**un diamètre intérieur de l'œillet (12) de la deuxième section d'accouplement (9) se situe entre 12 mm et 25 mm, de préférence en plus entre 15 mm et 20 mm et un diamètre extérieur de l'œillet (12) de la deuxième section d'accouplement (9) se situe entre 20 mm et 40 mm, de préférence en plus entre 25 mm et 35 mm.

6. Dispositif d'accouplement (1) selon au moins l'une quelconque des revendications précédentes, **caractérisé en ce qu'**une longueur totale (25) du dispositif d'accouplement (1) se situe entre 50 mm et 70 mm.

7. Dispositif d'accouplement (1) selon au moins l'une quelconque des revendications précédentes, **caractérisé en ce qu'**un axe central (30) de l'œillet (12) de la deuxième section d'accouplement (9) passe parallèlement aux axes centraux (29) des trous (7, 7') de la première section d'accouplement (5).
